# EUROPEAN PATENT APPLICATION

(11) **EP 3 139 039 A1**
(43) Date of publication of application: **08.03.2017**
(21) Application number: 16185814.7
(22) Date of filing: 26.08.2016
(51) Int. Cl.: F03G 1/00, F03G 1/08, F16D 41/24

(54) **DEVICE FOR STORING AND DELIVERING ELASTIC ENERGY**

(30) Priority: 02.09.2015 IT UB20153345
(71) Applicant: CMB S.R.L., 20090 Segrate (MI) (IT)
(72) Inventor: BONFIO, Attilio, 20134 MILANO (IT)
(74) Representative: Modiano, Micaela Nadia

(57) **Abstract**

A device for storing and delivering elastic energy (1), which comprises:
- elastic means (3) adapted to store and deliver elastic energy,
- a ring (5) adapted to be connected kinematically to a machine to which the elastic energy stored in the elastic means (3) is to be delivered, or from which energy to be stored in the form of the elastic energy in the elastic means (3) is to be drawn;
- a first motion transmission shaft (7) which is connected kinematically to the elastic means (3), wherein the rotation of the first shaft (7) in a first direction of rotation (A) loads the elastic means (3),
- a mechanical exchange device (9, 19) configured to render the first shaft (7) integral with the ring (5) in the first direction of rotation (A) and to render the first shaft (7) free with respect to the ring (5) in a second direction of rotation (O), which is opposite with respect to the first direction of rotation (A), allowing the free rotation of the ring (5) in the second direction of rotation (O),
- a second motion transmission shaft (11), the mechanical exchange device (9, 19) being configured to render the second shaft (11) integral with the ring (5) in the second direction of rotation (O),
- an assembly (13) for transferring the motion from the first shaft (7) to the second shaft (11),
- a freewheel mechanism (15) configured to transmit the motion from the first shaft (7) to the transfer assembly (13) only in the second direction of rotation (O) of the first shaft (7),
- a mechanism for locking the elastic means (3), which can be activated in order to lock the elastic means (3) in their loaded or partially loaded configuration, wherein the deactivation of the locking mechanism releases the elastic energy stored in the elastic means (3), producing the rotation of the first shaft (7) in the second direction of rotation (O).

## Description

The present invention relates to a device for storing and delivering elastic energy.

Currently the need is felt worldwide to identify and use renewable energy sources.

Obviously such need is also linked to the need to identify new ways of managing, storing and delivering energy, which are more efficient and which enable an intelligent management of the energy.

In nature, but not only in nature, there are countless examples of systems that continuously generate kinetic energy. For example rivers, the sea and the wind constitute a continuous reserve of kinetic energy which, however, is difficult to store and deliver as needed.

The aim of the present invention is to provide a device for storing and delivering elastic energy which solves the above problem, by making it possible to draw energy from a source of kinetic energy, in order to accumulate it in the form of elastic energy and deliver it as needed.

Within this aim, an object of the present invention is to provide a device for storing and delivering elastic energy which is compact and therefore can be applied in any type of applicative context.

Another object of the invention is to provide a device for storing and delivering elastic energy which is scalable in terms of size and performance as a function of the application.

A further object of the invention is to provide a device for storing and delivering elastic energy which is capable of offering the widest guarantees of reliability and safety in use.

A still further object of the invention is to provide a device for storing and delivering elastic energy which is easy to implement and the use of which entails an economic competitive advantage as well.

This aim and these and other objects which will become better apparent hereinafter are achieved by a device for storing and delivering elastic energy according to claim 1.

Further characteristics and advantages of the invention will become better apparent from the detailed description of a preferred, but not exclusive, embodiment of a device for storing and delivering elastic energy, which is illustrated by way of non-limiting example in the accompanying drawings wherein:

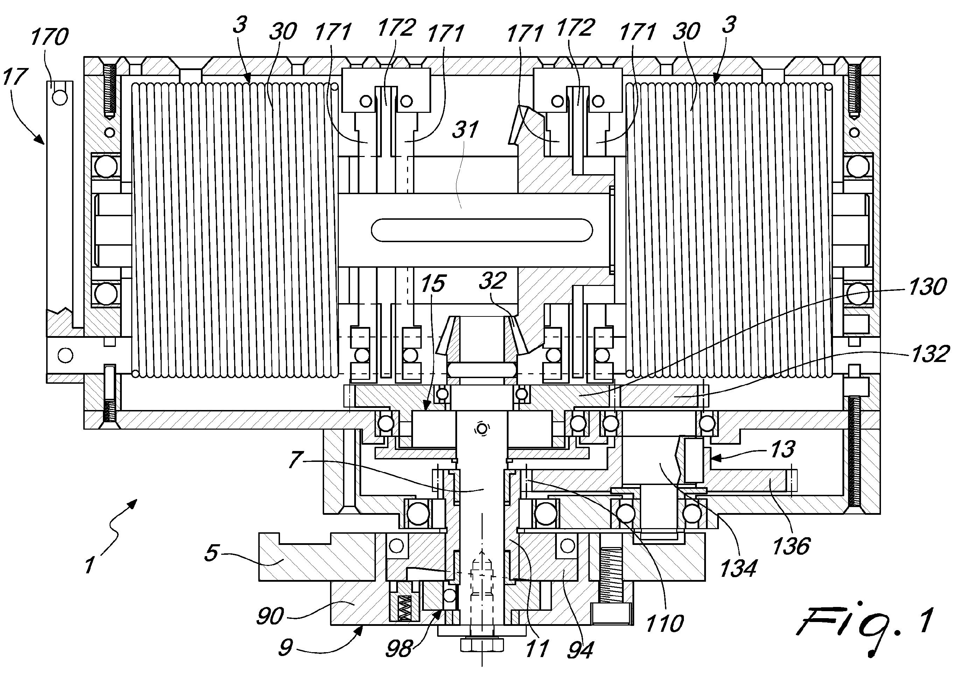

Figure 1 is a transverse cross-sectional view of an embodiment of a device for storing and delivering elastic energy, according to the invention;

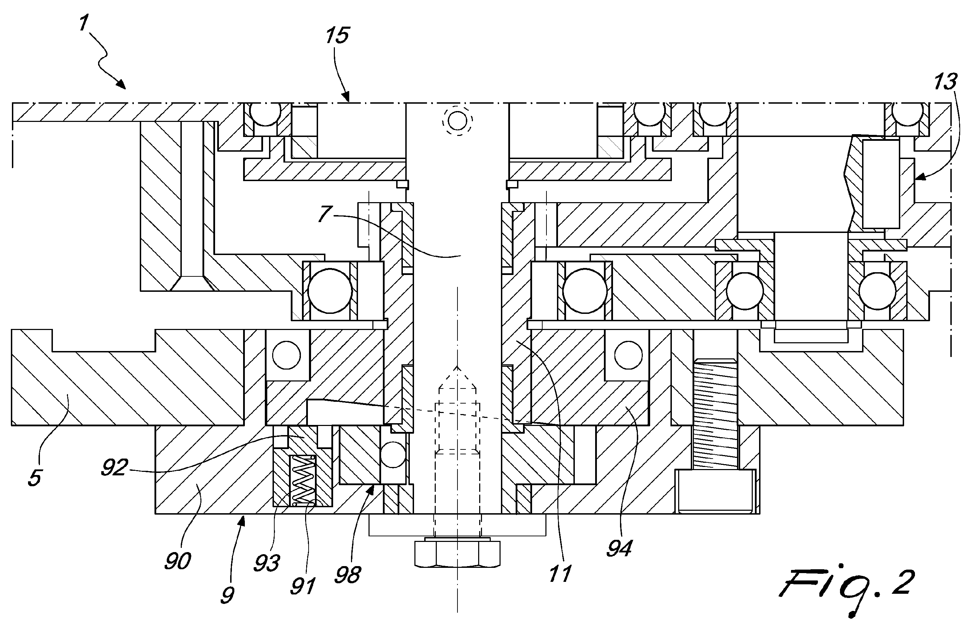

Figure 2 is an enlarged portion of Figure 1, showing in particular the mechanical exchange device of the device in Figure 1;

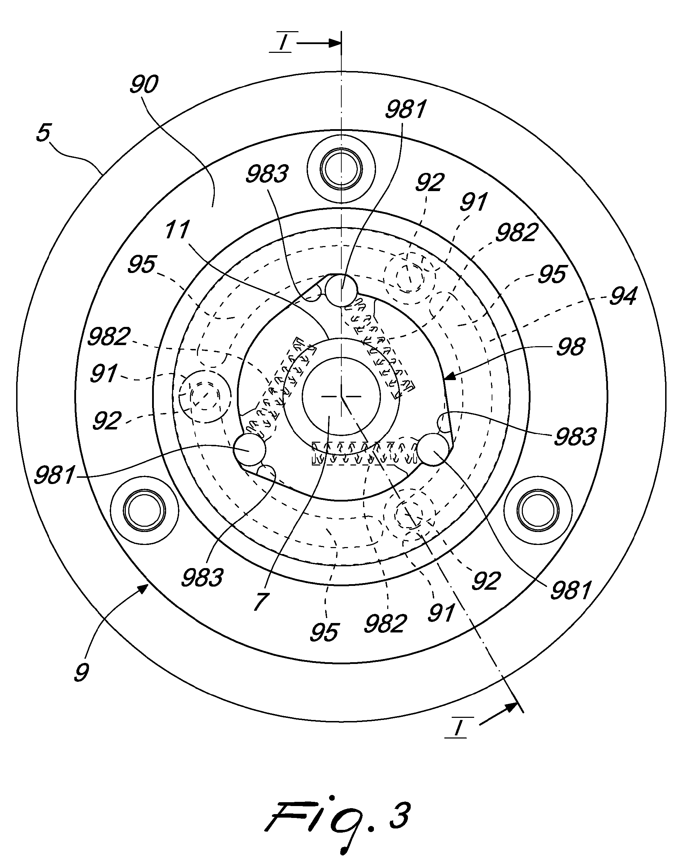

Figure 3 is a front elevation view of the mechanical exchange device shown in Figure 2;

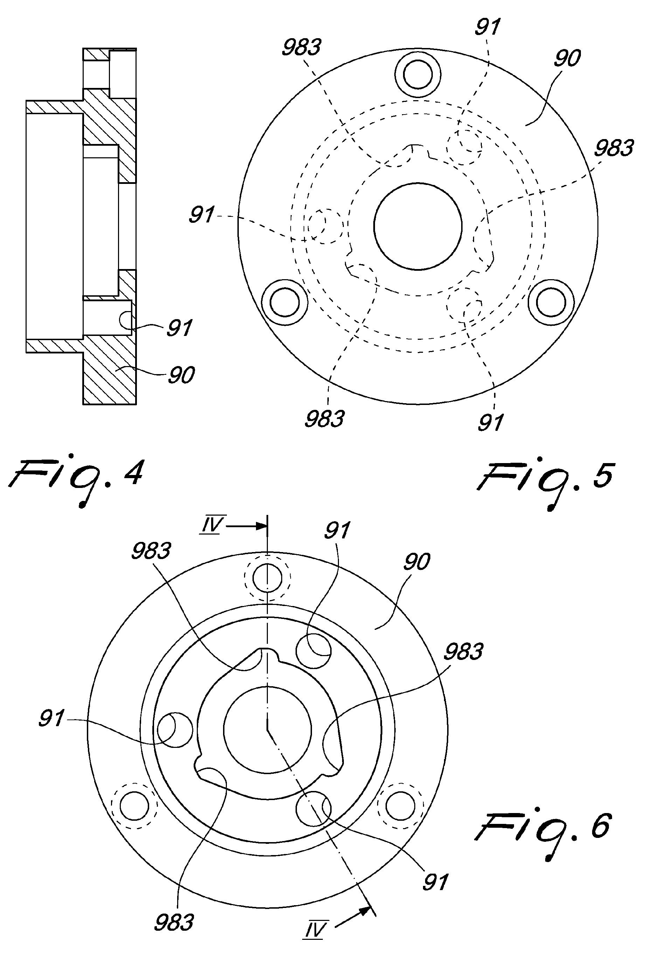

Figures 4, 5 and 6 are respectively a transverse cross-sectional view, a front view, and a rear view of a first component of the mechanical exchange device shown in Figure 2;

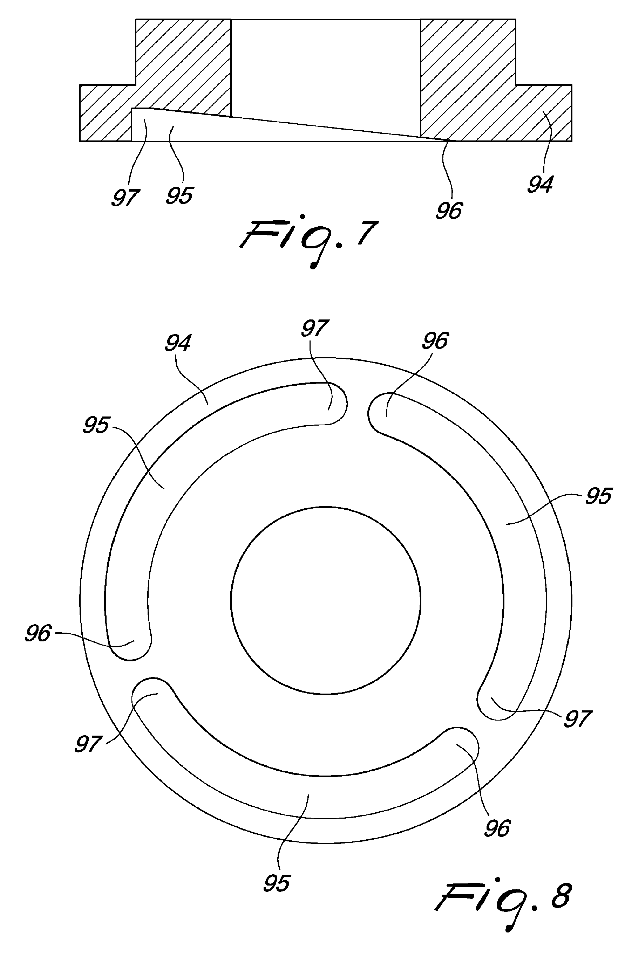

Figures 7 and 8 are respectively a transverse cross-sectional view and a front view of a second component of the mechanical exchange device shown in Figure 2;
Figures 9, 10a and 10b are respectively a plan view from above (Figure 9) and transverse cross-sectional views (Figures 10a and 10b) of the freewheel mechanism present in the device in Figure 1 in two different configurations of operation;

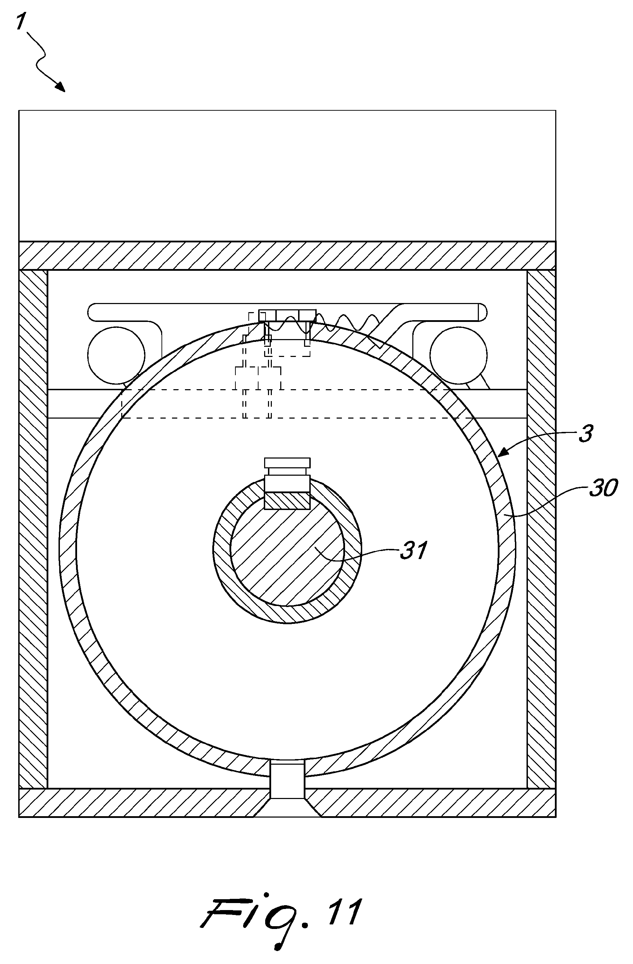

Figure 11 is a side view of the device in Figure 1;

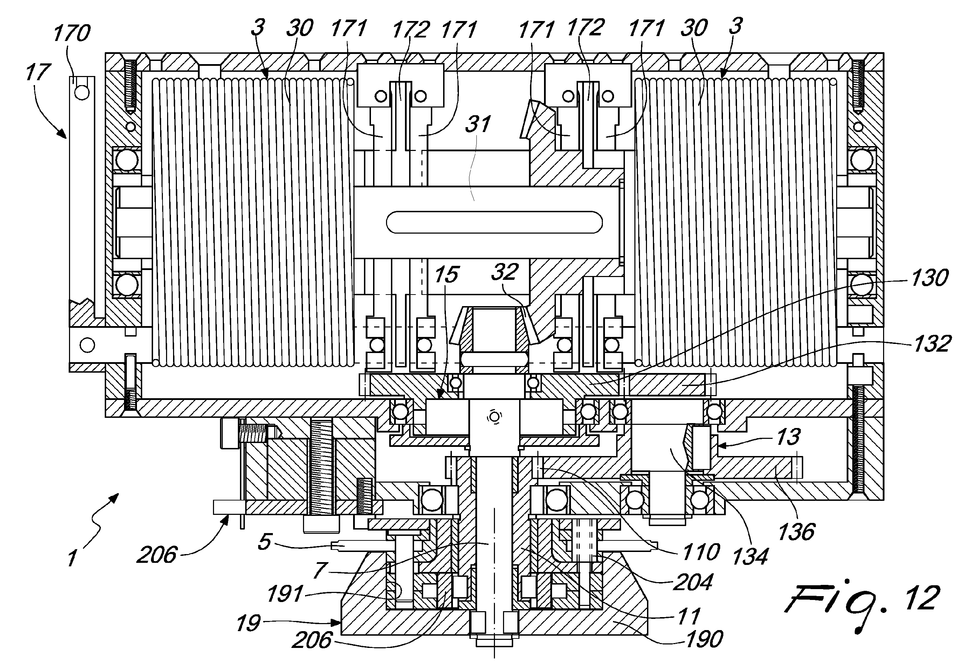

Figure 12 is a transverse cross-sectional view of a variation of the device for storing and delivering elastic energy shown in Figure 1, which differs in the presence of a different mechanical exchange device;

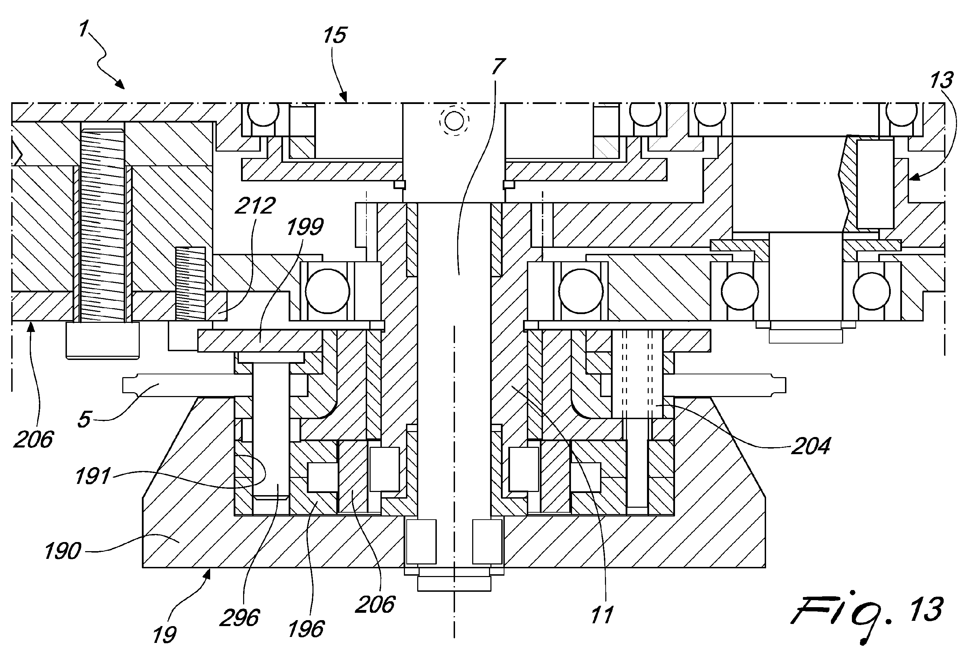

Figure 13 is an enlarged portion of Figure 12, showing in particular the mechanical exchange device;

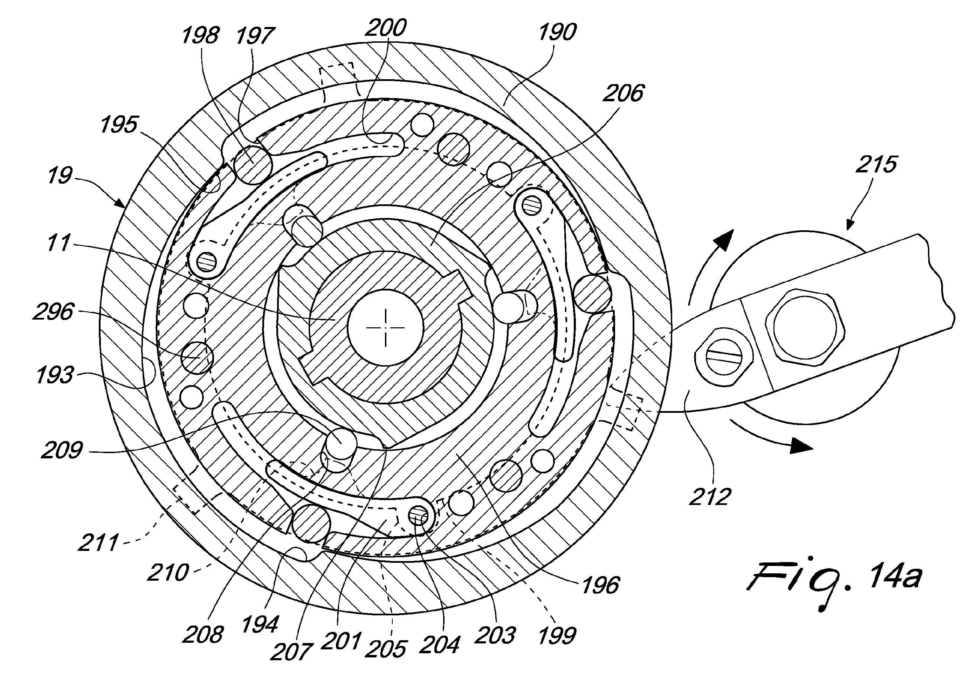

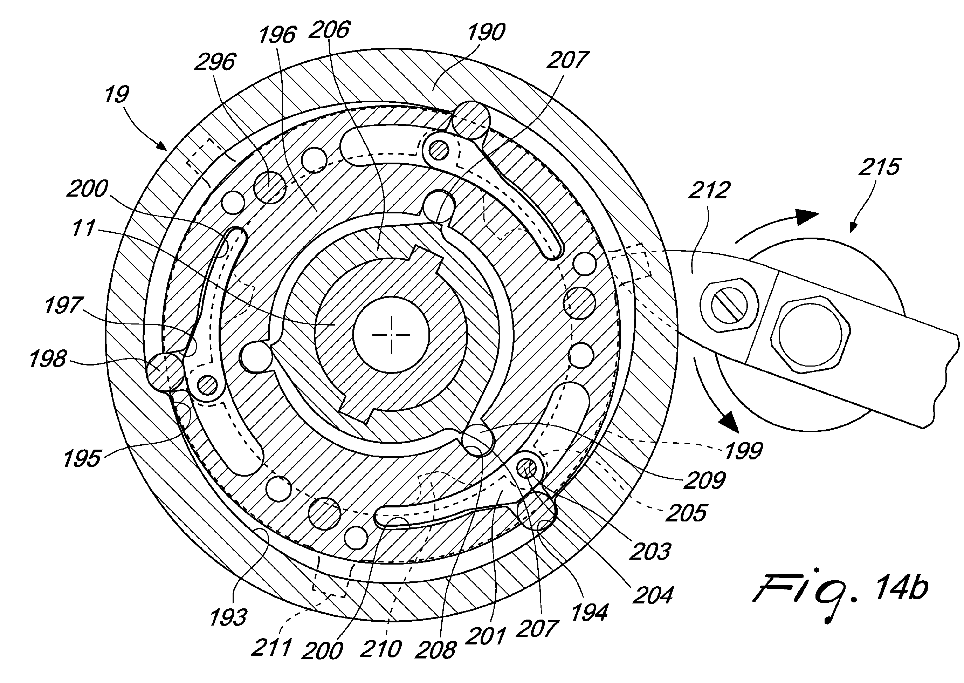

Figures 14a and 14b are two longitudinal cross-sectional views of the mechanical exchange device shown in Figure 13, in two different configurations of operation;

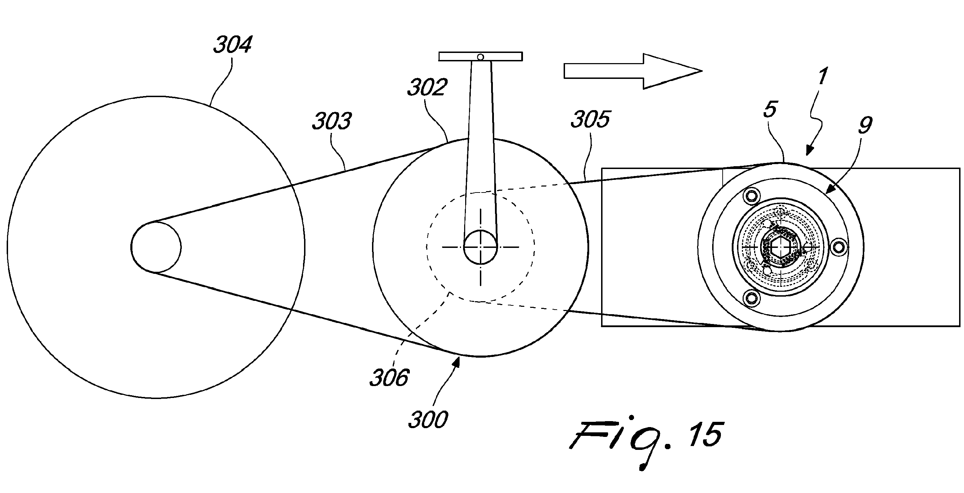

Figure 15 schematically illustrates the application of the device for storing and delivering elastic energy to a bicycle;

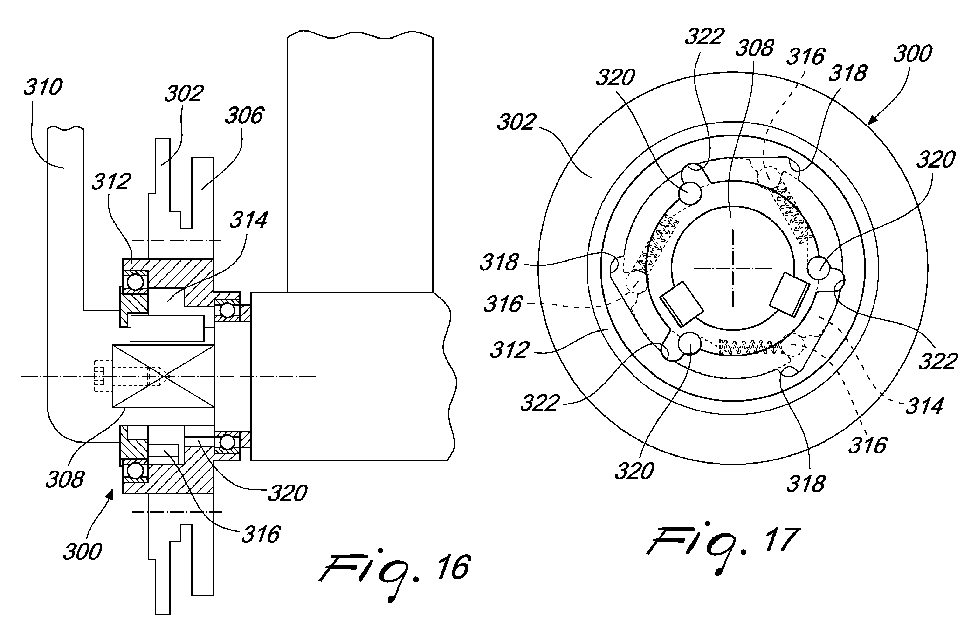

Figure 16 is a transverse cross-sectional view of an intelligent motion transmission device applied to the pedal of the bicycle in Figure 15;
Figure 17 is a front elevation view of the intelligent motion transmission device in Figure 16;

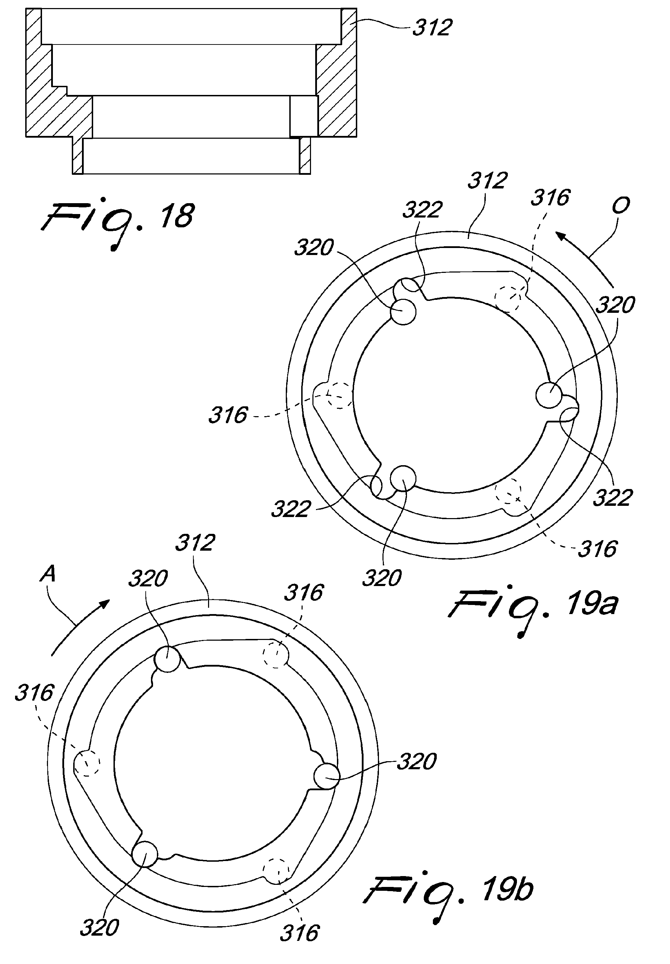

Figures 18, 19a and 19b show a first component of the intelligent motion transmission device in Figure 16, respectively in a transverse cross-sectional view (Figure 18) and in front views in two different configurations of operation (Figure 19a and 19b);

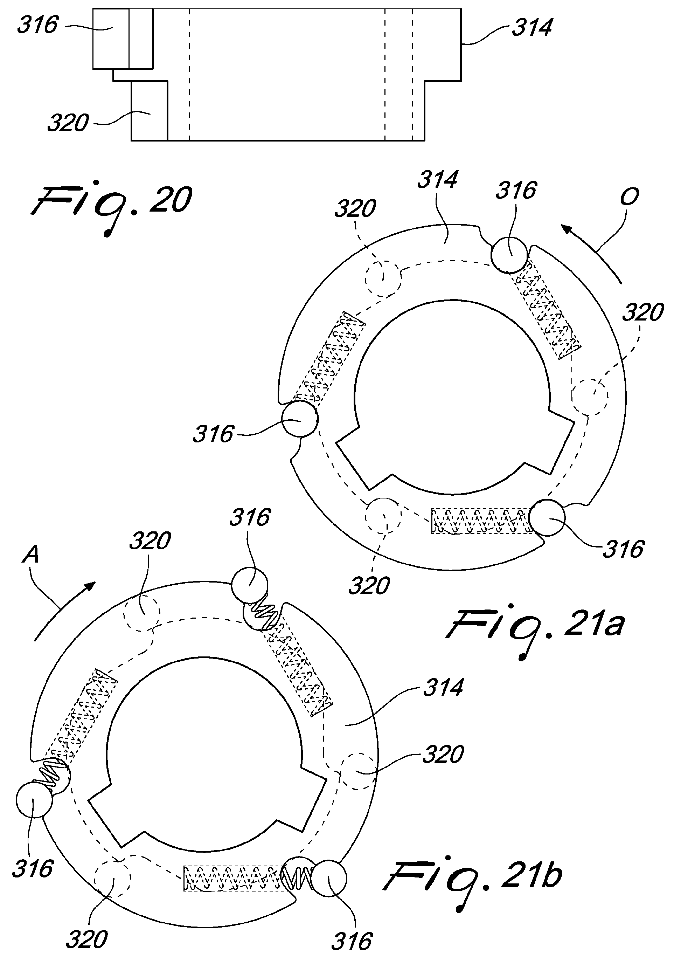

Figures 20, 21a and 21b show a second component of the intelligent motion transmission device in Figure 16, respectively in a transverse cross-sectional view (Figure 20) and in front views in two different configurations of operation (Figure 21a and 21b).

With reference to the figures, the device for storing and delivering elastic energy, generally designated by the reference numeral 1, comprises:
- elastic means 3 adapted to store and deliver elastic energy,
- a ring 5 adapted to be connected kinematically to a machine to which the elastic energy stored in the elastic means 3 is to be delivered, or from which energy to be stored in the form of the elastic energy in the elastic means 3 is to be drawn.

According to the invention, the device 1 comprises:
- a first motion transmission shaft 7 which is connected kinematically to the elastic means 3, wherein the rotation of the first shaft 7 in a first direction of rotation A (anticlockwise) loads the elastic means 3,
- a mechanical exchange device 9, 19 configured to render the first shaft 7 integral with the ring 5 in the first direction of rotation A and to render the first shaft 7 free with respect to the ring 5 in a second direction of rotation O (clockwise), which is opposite with respect to the first direction of rotation A, allowing the free rotation of the ring 5 in the second direction of rotation O,

- a second motion transmission shaft 11, wherein the mechanical exchange device 9, 19 is configured to render the second shaft 11 integral with the ring 5 in the second direction of rotation O,
- an assembly 13 for transferring the motion from the first shaft 7 to the second shaft 11,
- a freewheel mechanism 15 configured to transmit the motion from the first shaft 7 to the transfer assembly 13 only in the second direction of rotation O of the first shaft 7,
- a mechanism for locking the elastic means 3, which can be activated in order to lock the elastic means 3 in their loaded or partially loaded configuration, wherein the deactivation of such locking mechanism releases the elastic energy stored in the elastic means 3, producing the rotation of the first shaft 7 in the second direction of rotation O.

The elastic means 3 can advantageously comprise a pair of springs 30 which are connected together by a shaft 31, which is connected to the first shaft 7 by way of a conical gear coupling 32.

Advantageously the mechanism for locking the elastic means 3 can intervene directly on the shaft 31, locking it or leaving it free to rotate, in order to load the springs 30 or in order to leave the springs run-down 30.

The device for storing and delivering elastic energy 1 can comprise a braking mechanism 17 configured to reduce the release of the elastic energy by the elastic means 3.

The braking mechanism 17 can advantageously comprise a lever 170 which can be actuated by pressing at least one pair of brake-pads 171 against a brake-disk 172 which rotates integrally with the shaft 31.

Advantageously the transfer assembly 13 comprises:
- a first gear 130 which rotates integrally with the freewheel mechanism 15,
- a second gear 132 which meshes with the first gear 130,
- a transmission shaft 134 which rotates integrally with the second gear 132,
- a third gear 136, which rotates integrally with the transmission shaft 134 and meshes with a ring gear 110 which rotates integrally with the second shaft 11.

Advantageously the second shaft 11 is hollow and is fitted coaxially over and externally to the first shaft 7.

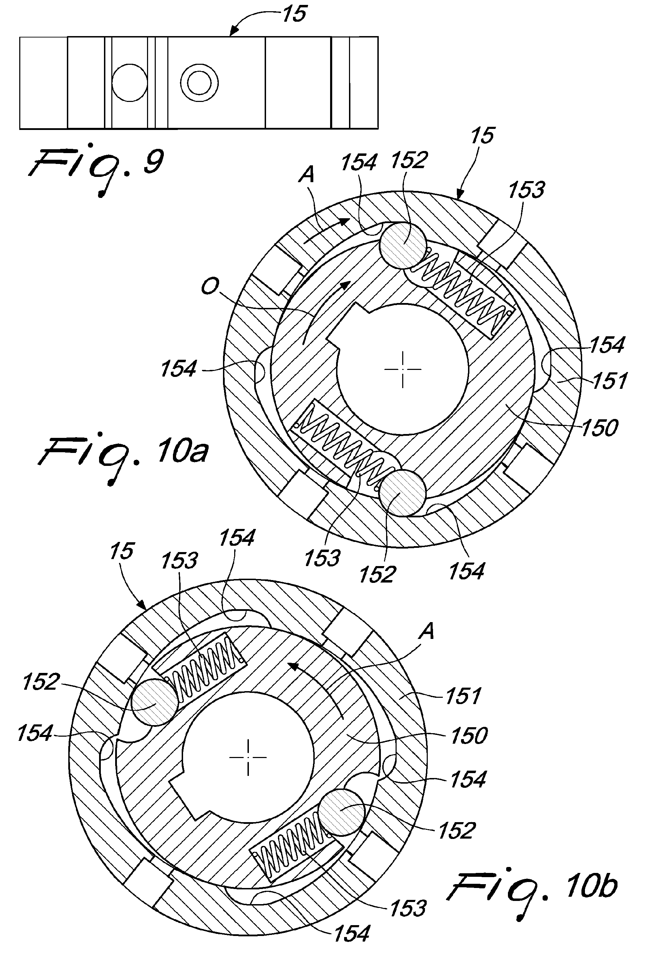

The freewheel mechanism 15, illustrated in Figures 9, 10a and 10b, advantageously comprises a central body 150, which rotates integrally with the first shaft 7, and a peripheral annular element 151, which is integral with the first gear 130. Associated with the central body 150 are a plurality of rollers 152 which are configured to protrude radially and externally with respect to the central body 150 by way of the thrust imparted by elastic means 153. Such rollers 152, when they protrude from the central body 150, engage conveniently with pockets 154 which are provided in the inner cylindrical surface of the peripheral annular element in order to transmit the motion from the central body 150 to the peripheral annular element 151 only in the second direction of rotation O of the central body 150 (Figure 10a), while the rotation in the first direction of rotation A of the central body 150 does not entrain the peripheral annular element 151 in rotation (Figure 10b).

The device for storing and delivering elastic energy 1 can comprise either of two different variants of the mechanical exchange device, which are designated respectively with the reference numerals 9 and 19.

A first exchange mechanism 9 is illustrated with reference to Figures from 1 to 11 and is particularly adapted for operating with light loads, while a second exchange mechanism 19 is illustrated with reference to Figures from 12 to 14b, and is particularly adapted for operating with heavy loads.

The mechanical exchange device 9 advantageously comprises:
- a first flange 90, which is integral with the ring 5 and in which a plurality of axial seats 91 are provided, each one accommodating a pin 92 and comprising elastic means for pushing 93 adapted to push the pin 92 out of its axial seat 91,
- a second flange 94, which is integral with the second shaft 11 and faces the first flange 90, wherein such second flange 94 comprises a plurality of recesses 95 which are configured to receive the portion of the pins 92 that protrudes toward the outside of the first flange 90. The recesses 95 are provided on the surface of the second flange 94 along a plurality of circular arcs and have a depth that decreases from a level equal to that of the surface of the second flange 94, at a first, flush end 96, to a level that is recessed with respect to the surface of the second flange 94, at a second end 97. The rotation of the first flange 90 with respect to the second flange 94 in the first direction of rotation A produces the sliding of the pins 92 within the recesses 95 from the first, flush end 96 to the second, recessed end 97. The pins 92 therefore enter the recesses 95 and entrain rotationally the second flange 94. Conversely, the rotation of the first flange 90 with respect to the second flange 94 in the second direction of rotation O produces the sliding of the pins 92 within the recesses 95 from the second, recessed end 97 to the first, flush end 96, so that the pins 92, in exiting from the recesses 95, do not entrain rotationally the second flange 94.

The mechanical exchange device 9 further comprises a freewheel mechanism 98 which rotates integrally with the first shaft 7 and is configured to transmit the motion from the first shaft 7 to the first flange 90 only in the second direction of rotation O of the first shaft 7.

The freewheel mechanism 98 comprises a central body 980 with which a plurality of rollers 981 are associated and configured to protrude radially and externally with respect to the central body 980 by way of the thrust imparted by elastic means 982. Such rollers 981, when they protrude from the central body 980, engage conveniently with pockets 983 which are provided in the inner cylindrical surface of the first flange 90 in order to transmit the motion from the first shaft 7 to the first flange 90 only in the second direction of rotation O of the first shaft 7.

The mechanical exchange device, according to the variation designated with the reference numeral 19 and illustrated in Figures from 12 to 14b, advantageously comprises:
- a first flange 190 which rotates integrally with the first shaft 7, wherein such first flange 190 comprises a substantially cylindrical hollow seat 191. A plurality of pockets 193 are provided on the inner cylindrical surface of the hollow seat 191 and are arranged along circular arcs, and have a first end 194 which is recessed internally with respect to the cylindrical surface of the hollow seat 191 and a second end 195 which lies opposite the first end 194 and is flush with the cylindrical surface of the hollow seat 191,
- a first annular element 196, which rotates integrally with the ring 5, by way of at least one axial shaft 296, accommodated within the hollow seat 191. The first annular element 196 comprises a plurality of peripheral openings 197, which are directed toward the outside and are each adapted to contain a roller 198 which can move radially within its peripheral opening 197 until it protrudes externally with respect to the first annular element 196 in order to enter one of the pockets 193 of the first flange 190. The peripheral openings 197 are each provided, in the first annular element 196, at an elongated seat 200 which accommodates an elongated element 201. The elongated element 201 is configured to slide within the elongated seat 200 and comprises a first portion which protrudes radially outward 202 and is configured to push the roller 198 toward the outside of the peripheral opening 197. The elongated element 201 further comprises a hole 203 which accommodates a first portion of an axial pin 204,
- a second annular element 199, which is coaxial to the first annular element 196 and comprises a plurality of semicircular seats 205, which are each configured to receive a second portion of the aforementioned axial pin 204 so that the movement of the elongated element 201 is associated with the movement of the second annular element 199,
- means 215 of temporarily locking the second annular element 199, which are configured to temporarily interrupt the rotation of the second annular element 199. Such interruption produces the relative movement of the elongated element 201 within said elongated seat 200 and the pushing of the roller 198 outward by way of the first portion which protrudes radially outward 202 of the elongated element 201.

The mechanical exchange device 19 further comprises a third annular element 206, which rotates integrally with the second shaft 11, coaxial to and within the first annular element 196, and comprises a plurality of radial protrusions 207. The first annular element 196 comprises a plurality of internal openings 208, which are directed toward the inside of the first annular element 196 and are each adapted to contain a roller 209 which can move radially within the internal opening 208 until it protrudes internally with respect to the first annular element 196 in order to cooperate with one of the radial protrusions 207. The roller 209 is configured to push radially outward a second portion that protrudes radially inward 210 of the elongated element 201.

The second annular element 199 advantageously comprises a plurality of teeth 211 which protrude radially outward. The temporary locking means 215 comprise a moveable slider 212 which is configured to be entrained by one of the teeth 211 into a position in which the second annular element 199 is temporarily locked. The slider 12 further comprises elastic means adapted to return it to an inactive position.

Operation of the device for storing and delivering elastic energy, in both of the variants presented above, is substantially the following:
- free rotation in the clockwise direction O of the ring 5 is allowed,
- rotation in the anticlockwise direction A of the ring 5 loads the elastic means 3,
- the elastic means 3 can be retained in their loaded or partially loaded configuration by means of the locking mechanism,

- when the locking mechanism is active, in order to retain the elastic means 3, the ring 5 can still be rotated in the clockwise direction O,
- when the locking mechanism is deactivated, the elastic means 3 deliver their stored elastic energy to the ring 5, making it rotate in the clockwise direction O,
- at any time during the delivery of the elastic charge, it is possible to activate the locking mechanism in order to retain the elastic means 3, and make the ring 5 rotate in the clockwise direction O.

The present invention further relates to an intelligent motion transmission device 300, which is shown in Figures from 15 to 21b.

Such device 300 is particularly adapted for bicycles or the like which are fitted with a device for storing and delivering elastic energy 1 as described above.

The intelligent motion transmission device 300 comprises:
- a first transmission ring 302, which is adapted to be connected kinematically, for example by way of a chain 303, to a wheel 304 of a bicycle,
- a second transmission ring 306, which rotates integrally with the first transmission ring 302 and is adapted to be connected kinematically to the ring 5 of the device for storing and delivering elastic energy 1, or to any other device for generating motion, such as an electric motor, for example by way of a chain 305,
- a rotation shaft 308, which is adapted to be connected to a pedal 310 of the bicycle,
- an external flange 312, which rotates integrally with the first transmission ring 302 and with the second transmission ring 306,
- an internal flange 314, which rotates integrally with the rotation shaft 308 and is accommodated coaxially within the external flange 312,
- a first group of rollers 316, which are associated with the internal flange 314, can move radially toward the outside of the internal flange 314 and are adapted to engage a first group of pockets 318 which are provided within the external flange 312 so that the rotation of the internal flange 314 in the second direction of rotation O rotationally entrains the external flange 312,
- a second group of rollers 320, which are associated with the internal flange 314, can move radially toward the outside of the internal flange 314 and are adapted to engage a second group of pockets 322 which are provided within the external flange 312 so that the rotation of the internal flange 314 in the first direction of rotation A rotationally entrains the external flange 312.

The first group of rollers 316 and the second group of rollers 320 do not cooperate respectively with the first group of pockets 318 and with the second group of pockets 322 when the external flange 312 rotates in the second direction of rotation O.

Substantially the intelligent motion transmission device 300 makes it possible to turn the pedal 310, and therefore the shaft 308, in the clockwise direction O, placing the wheel 304 of the bicycle in motion. The rotation is also transmitted to the ring 5 of the device 1, which, however, rotates freely in the clockwise direction O.

The rotation of the pedal 310, and therefore of the shaft 308, in the anticlockwise direction A, is transmitted to the ring 5 of the device 1 in order to load its elastic means 3. The freewheel mechanism present in the hub of the wheel 304 of the bicycle decouples the rotation of the pedal 310 from the rotation of the wheel 304.

The rotation in the clockwise direction O imparted by the ring 5 to the second transmission ring 306 also turns the first transmission ring 302 and therefore the wheel 304. However, the rotation in the clockwise direction O of the external flange 302 is not transmitted to the internal flange 314 and therefore the shaft 308 and, with it, the pedal 310 remain idle.

With reference to the example of a cyclist using a bicycle fitted with both the device for storing and delivering elastic energy 1 and the intelligent motion transmission device 300, the following should be noted.

The cyclist can pedal normally in the clockwise direction since the ring 5 of the device 1 rotates freely.

When the bicycle advances by inertia the cyclist can decide to pedal in the anticlockwise direction in order to load the elastic means 3 of the device 1. When the cyclist has sufficiently loaded the elastic means 3 or has to resume pedaling in the clockwise direction, the cyclist activates the mechanism for locking the elastic means 3 and continues pedaling.

When the cyclist needs to receive the elastic energy stored in the elastic means 3, he/she deactivates the locking mechanism and the rotation of the ring 5 of the device 1 is transmitted, by way of the device 300, to the wheel 304 of the bicycle without entraining the pedals 310.

The example of the bicycle should not be considered limiting, the device for storing and delivering elastic energy 1 and the intelligent motion transmission device 300 both being applicable, together or separately, to any system that entails the generation and use of kinetic energy and which can entail the storage of such kinetic energy in the form of elastic energy.

In practice it has been found that the device for storing and delivering elastic energy, according to the present invention, achieves the intended aim and objects in that it makes it possible to store and deliver elastic energy in an efficient manner.

Another advantage of the device for storing and delivering elastic energy, according to the invention, consists in being able to manage the delivery of the energy as a function of requirements.

Another advantage of the device for storing and delivering elastic energy, according to the invention, consists in that it is scalable in size and performance in order to be applied to any system.

The device for storing and delivering elastic energy, and the intelligent motion transmission device, thus conceived, are susceptible of numerous modifications and variations, all of which are within the scope of the appended claims.

Moreover, all the details may be substituted by other, technically equivalent elements.

In practice the materials employed, provided they are compatible with the specific use, and the contingent dimensions and shapes, may be any according to requirements.

The disclosures in Italian Patent Application No. 102015000047814 (UB2015A003345) from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for storing and delivering elastic energy (1), which comprises:
- elastic means (3) adapted to store and deliver elastic energy,
- a ring (5) adapted to be connected kinematically to a machine to which said elastic energy stored in said elastic means (3) is to be delivered, or from which energy to be stored in the form of said elastic energy in said elastic means (3) is to be drawn,
**characterized in that** it comprises:
- a first motion transmission shaft (7) which is connected kinematically to said elastic means (3), wherein the rotation of said first shaft (7) in a first direction of rotation (A) loads said elastic means (3),
- a mechanical exchange device (9, 19) configured to render said first shaft (7) integral with said ring (5) in said first direction of rotation (A) and to render said first shaft (7) free with respect to said ring (5) in a second direction of rotation (O), which is opposite with respect to said first direction of rotation (A), allowing the free rotation of said ring (5) in said second direction of rotation (O),
- a second motion transmission shaft (11), said mechanical exchange device (9, 19) being configured to render said second shaft (11) integral with said ring (5) in said second direction of rotation (O),
- an assembly (13) for transferring the motion from said first shaft (7) to said second shaft (11),
- a freewheel mechanism (15) configured to transmit the motion from said first shaft (7) to said transfer assembly (13) only in said second direction of rotation (O) of said first shaft (7),
- a mechanism for locking said elastic means (3), which can be activated in order to lock said elastic means (3) in their loaded or partially loaded configuration, wherein the deactivation of said locking mechanism releases said elastic energy stored in said elastic means (3), producing the rotation of said first shaft (7) in said second direction of rotation (O).

2. The device for storing and delivering elastic energy (1) according to claim 1, comprising a braking mechanism (17) configured to reduce the release of said elastic energy by said elastic means (3).

3. The device for storing and delivering elastic energy (1) according to claims 1 or 2, **characterized in that** said transfer assembly (13) comprises:
- a first gear (130) which rotates integrally with said freewheel mechanism (15),
- a second gear (132) which meshes with said first gear (130),
- a transmission shaft (134) which rotates integrally with said second gear (132),
- a third gear (136), which rotates integrally with said transmission shaft (134) and meshes with a ring gear (110) which rotates integrally with said second shaft (11).

4. The device for storing and delivering elastic energy (1) according to one or more of the preceding claims, **characterized in that** said second shaft (11) is hollow and is fitted coaxially over and externally to said first shaft (7).

5. The device for storing and delivering elastic energy (1) according to one or more of the preceding claims, **characterized in that** said mechanical exchange device (9) comprises:
- a first flange (90), which is integral with said ring (5) and in which a plurality of axial seats (91) are provided, each one accommodating a pin (92) and comprising elastic means for pushing (93) adapted to push said pin (92) out of said axial seat (91),
- a second flange (94), which is integral with said second shaft (11) and faces said first flange (90), said second flange (94) comprising a plurality of recesses (95) which are configured to receive the portion of said pins (92) that protrudes toward the outside of said first flange (90), wherein said recesses (95) are provided on the surface of said second flange (94) along a plurality of circular arcs and have a depth that decreases from a level equal to that of said surface of said second flange (94), at a first, flush end (96), to a level that is recessed with respect to said surface of said second flange (94), at a second end (97), and wherein the rotation of said first flange (90) with respect to said second flange (94) in said first direction of rotation (A) produces the sliding of said pins (92) within said recesses (95) from said first, flush end (96) to said second, recessed end (97), said pins (92) entering said recesses (95) and entraining rotationally said second flange (94), while the rotation of said first flange (90) with respect to said second flange (94) in said second direction of rotation (O) produces the sliding of said pins (92) within said recesses (95) from said second, recessed end (97) to said first, flush end (96), said pins (92) exiting from said recesses (95) and not entraining rotationally said second flange (94).

6. The device for storing and delivering elastic energy (1) according to claim 5, **characterized in that** said mechanical exchange device (9) comprises a freewheel mechanism (98) which rotates integrally with said first shaft (7) and is configured to transmit the motion from said first shaft (7) to said first flange (90) only in said second direction of rotation (O) of said first shaft (7).

7. The device for storing and delivering elastic energy (1) according to one or more of claims 1 to 4, **characterized in that** said mechanical exchange device (19) comprises:
- a first flange (190) which rotates integrally with said first shaft (7), said first flange (190) comprising a substantially cylindrical hollow seat (191), a plurality of pockets (193) being provided on the inner cylindrical surface of said hollow seat (191) and being arranged along circular arcs, said pockets (193) having a first end (194) which is recessed internally with respect to said cylindrical surface of said hollow seat (191) and a second end (195) which lies opposite said first end (194) and is flush with said cylindrical surface of said hollow seat (191),
- a first annular element (196), which rotates integrally with said ring (5) and is accommodated within said hollow seat (191), said first annular element (196) comprising a plurality of peripheral openings (197) which are directed toward the outside of said first annular element (196) and are each adapted to contain a roller (198) which can move radially within said peripheral opening (197) until it protrudes externally with respect to said first annular element (196) in order to enter one of said pockets (193) of said first flange (190), said peripheral openings (197) being each provided at an elongated seat (200) which accommodates an elongated element (201), said elongated element (201) being configured to slide within said elongated seat (200), said elongated element (201) comprising a first portion which protrudes radially outward (202) and is configured to push said roller (198) toward the outside of said peripheral opening (197), said elongated element (201) comprising a hole (203) which accommodates a first portion of an axial pin (204),
- a second annular element (199), which is coaxial to said first annular element (196) and comprises a plurality of semicircular seats (205), which are each configured to receive a second portion of said axial pin (204) so that the movement of said elongated element (201) is associated with the movement of said second annular element (199),
- means (215) for temporarily locking said second annular element (199), which are configured to temporarily interrupt the rotation of said second annular element (199), said interruption producing the relative movement of said elongated element (201) within said elongated seat (200) and the pushing of said roller (198) outward by way of said first portion which protrudes radially outward (202) of said elongated element (201).

8. The device for storing and delivering elastic energy (1) according to claim 7, **characterized in that** said mechanical exchange device (19) comprises a third annular element (206), which rotates integrally with said second shaft (11), and comprises a plurality of radial protrusions (207), said first annular element (196) comprising a plurality of internal openings (208), which are directed toward the inside of said first annular element (196) and are each adapted to contain a roller (209) which can move radially within said internal opening (208) until it protrudes internally with respect to said first annular element (196) in order to cooperate with one of said radial protrusions (207), said roller (209) being configured to push radially outward a second portion that protrudes radially inward (210) of said elongated element (201).

9. The device for storing and delivering elastic energy (1) according to claim 7 or 8, **characterized in that** said second annular element (199) comprises a plurality of teeth (211) which protrude radially outward, said temporary locking means (215) comprising a moveable slider (212) which is configured to be entrained by one of said teeth (211) into a position in which said second annular element (199) is temporarily locked, said slider (212) comprising elastic means adapted to return it to an inactive position.

10. An intelligent motion transmission device (300), particularly for bicycles or the like, which is provided with a device for storing and delivering elastic energy (1), according to one or more of the preceding claims, **characterized in that** it comprises:
- a first transmission ring (302), which is adapted to be connected kinematically to a wheel (304) of a bicycle,
- a second transmission ring (306), which rotates integrally with said first transmission ring (302) and is adapted to be connected kinematically to said ring (5) of said device for storing and delivering elastic energy (1),
- a rotation shaft (308), which is adapted to be connected to a pedal (310) of said bicycle,
- an external flange (312), which rotates integrally with said first transmission ring (302) and with said second transmission ring (306),
- an internal flange (314), which rotates integrally with said rotation shaft (308) and is accommodated coaxially within said external flange (312),
- a first group of rollers (316), which are associated with said internal flange (314), can move radially toward the outside of said internal flange (314) and are adapted to engage a first group of pockets (318) which are provided within said external flange (312) so that the rotation of said internal flange (314) in said second direction of rotation (O) rotationally entrains said external flange (312),
- a second group of rollers (320), which are associated with said internal flange (314), can move radially toward the outside of said internal flange (314) and are adapted to engage a second group of pockets (322) which are provided within said external flange (312) so that the rotation of said internal flange (314) in said first direction of rotation (A) rotationally entrains said external flange (312),
- wherein said first group of rollers (316) and said second group of rollers (320) do not cooperate respectively with said first group of pockets (318) and with said second group of pockets (322) when said external flange (312) rotates in said second direction of rotation (O).
